# EUROPEAN PATENT APPLICATION

(11) **EP 4 804 150 A1**
(43) Date of publication of application: **09.09.2026**
(21) Application number: 26159546.6
(22) Date of filing: 19.02.2026
(51) Int. Cl.: G06V 30/10, G06V 30/14, G06V 30/416, G06V 30/40

(54) **DOCUMENT PROCESSING DEVICE, DOCUMENT PROCESSING SYSTEM, AND DOCUMENT PROCESSING METHOD**

(30) Priority: 07.03.2025 JP 2025036665
(71) Applicant: Toshiba TEC Kabushiki Kaisha, Tokyo 141-8562 (JP)
(72) Inventor: Aoyama, Ryuichi, Tokyo, 141-8562 (JP)
(74) Representative: Bandpay & Greuter

(57) **Abstract**

According to one embodiment, a document processing device has a user database in which user identifications are associated with custom words and keywords to be used in a sensitive information redaction processing. A processor acquires a user identification and an electronic document, causes a text recognition processing to be performed and acquires text recognition results data. The processor then identifies a keyword and any keyword-related words in the text recognition data. The keyword-related word has a predefined positional relationship to the keyword. The keyword-related word can be added to a custom word list. A list of personal information words in the electronic document is acquired and compared to words from the text recognition data. The text recognition words are then compared to the custom word list and words that are either deemed personal information or equivalent to a custom word are set for masking.

## Description

### FIELD

Embodiments described herein relate generally to a document processing device, a document processing system, and a document processing method.

### BACKGROUND

A service for extracting, via AI (artificial intelligence) processing or the like, words likely to reflect personal information from a document is already known.

However, in a service of this type, generally the personal information types that are common to a large number of users, such as names and addresses, will be successfully targeted for extraction, but less common personal information types might not be successfully recognized and extracted in some cases.

Because of such circumstances, it is desired to better identify personal information including those words that are not typically extracted as personal information by a general-purpose service targeting a large number of users.

### DISCLOSURE OF INVENTION

To this end, there are provided a document processing device, a document processing system, and a document processing method as defined in accompanying claims.

### BRIEF DESCRIPTION OF THE DRAWINGS

FIG. 1 is a block diagram illustrating a document processing device according to an embodiment and a schematic configuration of a service system incorporating a document processing device.
FIG. 2 is a diagram schematically illustrating a configuration of a record included in a user database.
FIG. 3 is a flowchart of document processing by a document processing device according to an embodiment.
FIG. 4 is a diagram illustrating an example of a document to be processed.

### DETAILED DESCRIPTION

An object of embodiments is to provide a document processing device, a document processing system, and a document processing method that can identify words that are either identifiable as personal information by a general-purpose service for extracting the personal information targeting a large number of users or custom words (e.g., user defined words) that may be related to a user defined keyword, such as a section heading or information label.

In general, according to one embodiment, a document processing device includes a storage unit for a user database in which user identifications are associated with custom words and keywords to be used in a sensitive information redaction processing on electronic documents, a communication unit connectable to a communication network, and a processor. The processor is configured to: acquire a user identification; acquire an electronic document; cause a text recognition processing to be performed on the electronic document; acquire text recognition data from the text recognition processing performed on the electronic document; identify a keyword associated with the user identification in the text recognition data; identify a keyword-related word in the text recognition data, the keyword-related word being in a predefined positional relationship with the keyword, and add the identified keyword-related word to a custom word list associated with the user identification; acquire a list of personal information words identified in the electronic document; compare each OCR identified word in the text recognition data to the list of personal information words, and set any OCR identified word matching a listed personal information word for masking in a processed electronic document; and determine whether any OCR identified word not matching the list of personal information words is equivalent to a custom word on the custom word list, and set any OCR identified word determined to be equivalent to a listed custom word for masking in the processed electronic document.

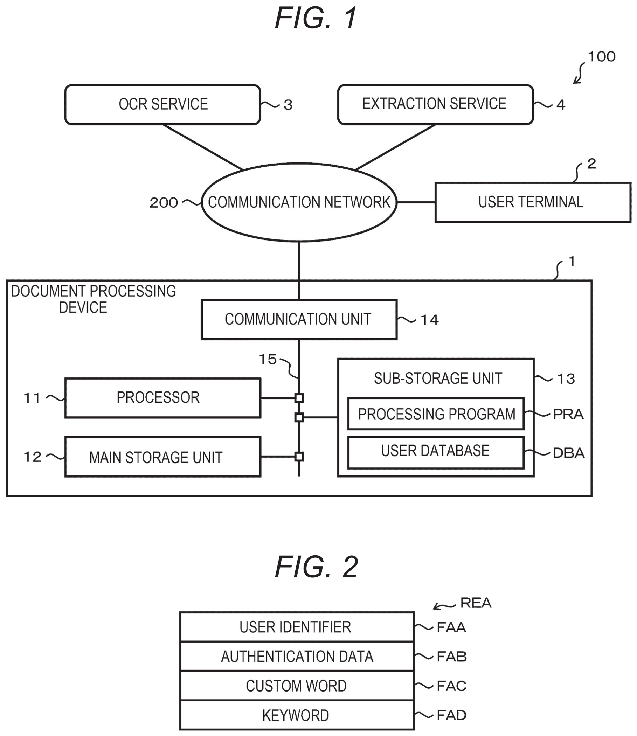

FIG. 1 is a block diagram of a document processing device 1 according to the present embodiment. FIG. 1 also depicts a schematic configuration of a service system 100 incorporating a document processing device 1.

The service system 100 provides a user of a user terminal 2 a document processing service. The document processing service identifies and extracts personal information included in a document. The document processing device 1 and the user terminal 2 are communicably connected via a communication network 200. The service system 100 provides, via the communication network 200, an OCR (optical character recognition) service 3 and an extraction service 4 available to users of the document processing device 1. A plurality of user terminals 2 can be included in the service system 100 but only one representative user terminal 2 is specifically illustrated in FIG. 1.

As the communication network 200, the Internet, a VPN (virtual private network), a LAN (local area network), a public communication network, a mobile communication network, and the like can be used independently or in combination as appropriate. As the communication network 200, the Internet is used in the present example.

The document processing device 1 is an information processing device that performs information processing for a document processing service utilizing the OCR service 3 and the extraction service 4.

The user terminal 2 is a terminal device that the user operates in order to use the document processing service. As a user terminal 2, any information processing device providing the function of performing data communication via the communication network 200 can be used. That is, as the user terminal 2, a general-purpose computer device, a tablet computer, a smartphone, or the like can be used.

The OCR service 3 is a web service for recognizing character strings included in a document and extracting words. The OCR service 3 is provided as, for example, a cloud service.

The extraction service 4 is a web service for identifying and extracting personal information in the words and text included in a document subjected to OCR service 3 or the like. The extraction service 4 is provided as, for example, a cloud service. In the present example, extraction service 4 is a service setup for performing extraction of personal information for a large number of different users in a general-purpose manner.

The document processing device 1 includes a processor 11, a main storage unit 12, a sub-storage unit 13, a communication unit 14, and a transmission line 15.

A general-purpose computer may be specialized by execution of appropriate software to serve as the document processing device 1.

The processor 11 executes, according to an operating system and an information processing program such as an application program, information processing for controlling the units in order to implement the various described functions of the document processing device 1.

The main storage unit 12 includes a read-only memory region and a rewritable memory region. The main storage unit 12 stores a part of the information processing program in the read-only memory region. The main storage unit 12 sometimes stores data necessary for the processor 11 to execute processing for controlling the units. The main storage unit 12 uses the rewritable memory region as a work area for the processor 11.

The sub-storage unit 13 is, for example, an EEPROM (electric erasable programmable read-only memory, an HDD (hard disc drive), an SSD (solid-state drive), or other storage devices can be used. The sub-storage unit 13 stores data used by the processor 11 in performing various processing and data generated by the processing of the processor 11. The sub-storage unit 13 sometimes stores the information processing program. In the present embodiment, the sub-storage unit 13 stores a processing program PRA. The processing program PRA is an application program including algorithmic instructions for performing the information processing described below. A part of a storage region of the sub-storage unit 13 is used as a region for storing a user database DBA.

The communication unit 14 executes communication processing for performing data communication across the communication network 200. As the communication unit 14, for example, a network interface for the Internet can be used.

The transmission line 15 comprises an address bus, a data bus, and a control signal line and permits data and control signals to be exchanged among the connected units.

As hardware of the document processing device 1, for example, hardware of a web server can be used. Accordingly, the document processing device 1 may include, besides the components explained above, additional devices or units for functions of a web server.

The document processing device 1 may be transferred with processing program PRA stored in the sub-storage unit 13. However, in some examples, the processing program PRA may be transferred separately from the hardware. In other examples, an existing processing program previously installed on the document processing device 1 may be updated or modified to correspond to the processing program PRA. In general, the processing program PRA being written to the sub-storage unit 13 according to operation of any operator. The transfer of the processing program PRA can be performed by being recorded in a removable recording medium such as a magnet disk, a magneto-optical disk, an optical disk, or a semiconductor memory or by communication via a network.

FIG. 2 is a diagram schematically illustrating a configuration of a record REA included in the user database DBA.

The user database DBA comprises a set of individual records REA correlated with the individual users of the document processing service. Each record REA includes fields FAA, FAB, FAC, and FAD. The field FAA is a field for setting a user identifier for distinguishing the correlated user from the other users. The field FAB is a field for setting authentication data used to authenticate the correlated user. The field FAC is a field for setting a custom word concerning the correlated user. The field FAD is a field for setting a keyword concerning the correlated user.

The following describes the operation of the document processing device 1 configured as described above. Note that the specific content of processing explained below is only an example and a change of the order of the processing, an omission of a part of the processing, an addition of other processing, or the like is possible without departing from the disclosure. In the following explanation, particular explanation regarding known or obvious processing may be omitted in order to clearly highlight the characteristic aspects of the present embodiment. For example, certain transitions between processing states directed by specific instruction of the user/operator may be omitted. Similarly, when certain errors occur in processing, the details of the processing for coping with the error or otherwise recovering from the error may be omitted.

Various kinds of information may be exchanged among the document processing device 1, the user terminal 2, the OCR service 3, and the extraction service 4 via the communication network 200. Detailed description of the content of these signals or information exchanges may be omitted.

The document processing service may be provided targeting any user type. In the example, it is assumed that "the user" may be an individual, a group of individuals, and/or an organization, such as a company. In the document processing device 1, the processor 11 performs registration of a user for the document processing service according to conventional procedures for user registration for a web service. As part of this registration, processor 11 adds the record REA for the relevant user to the user database DBA.

The processor 11 sets a unique user identifier (determined according to a predetermined rule to be different from other user identifiers) in the field FAA of the record REA. In some cases, processor 11 may set, in the field FAA, a user identifier selected by the registering user.

In the field FAB, processor 11 sets authentication data, such as a password designated by the user, to be used for authentication of the user when logging on to the web service or the like.

If the user designates a custom word, the processor 11 sets this word in the field FAC. If the user does not designate a custom word, the processor 11 does not set data in the field FAC. Alternatively, the processor 11 may not exclude the field FAC from the record REA or may set dummy data in the field. If the user designated a plurality of words to serve as custom words, the processor 11 includes all these words in the field FAC.

If the user designates a word to serve as a keyword, the processor 11 sets this designated word (the keyword) in the field FAD. If the user does not designate a keyword, the processor 11 does not set data in the field FAD. Alternatively, the processor 11 may exclude the field FAD from the record REA or set dummy data in the field FAD. If the user designates a plurality of words to serve as keywords, the processor 11 includes all of the words in the field FAD.

The user can request a change of the custom word and the keyword by using the user terminal 2 to communicate with the document processing device 1 at any time after registration. In response to such a request, the processor 11 modifies the custom word(s) included in the field FAC or the keyword(s) included in the field FAD.

When desiring a document to be processed to identify and extract personal information, the user accesses the document processing device 1 from the user terminal 2 via the communication network 200. The processor 11 starts processing the supplied user document based on the processing program PRA.

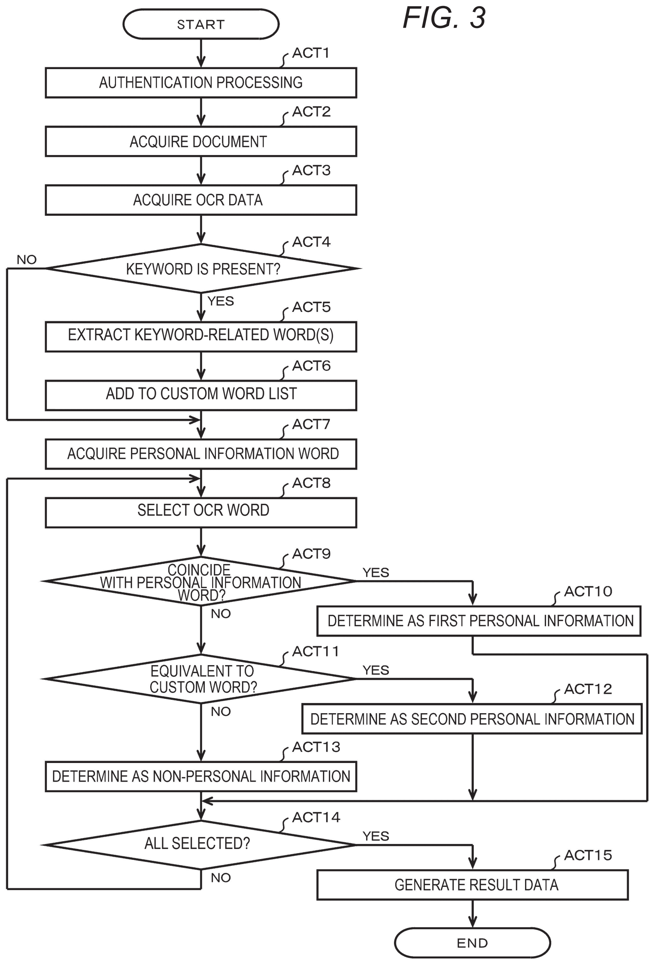

FIG. 3 is a flowchart illustrating a procedure of the document processing by the processor 11.

In ACT1, the processor 11 performs authentication processing for the user. The authentication processing may be conventional authentication processing for provision of a web service. If succeeding in the authentication, the processor 11 proceeds to ACT2.

In ACT2, the processor 11 acquires a document to be a processing target. For example, the processor 11 transmits, to the user terminal 2, webpage data for causing the user terminal 2 to display an operation screen for uploading document data. When document data is uploaded from the user terminal 2 by the operator via the operation screen, the processor 11 saves the document data in the sub-storage unit 13.

In ACT3, the processor 11 acquires OCR data for the acquired document data. That is, the processor 11 requests the OCR service 3 to perform OCR processing on the acquired document data. The processor 11 then acquires OCR data from the OCR service 3 as a response to the request.

The OCR service 3 recognizes character strings in the document, identifies/extracts word corresponding to the character strings, and generates extracted word data.

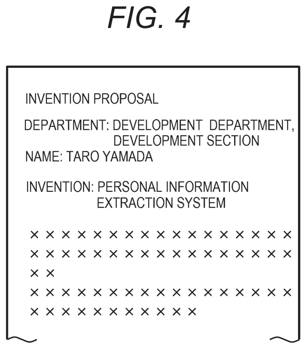

FIG. 4 is a diagram illustrating an example of a document used as a processing target. The data indicated by "X" in the document illustrated in FIG. 4 can be any character string or text but the specific character string is omitted from the depiction in FIG. 4.

For the document illustrated in FIG. 4, the OCR service 3 generates extracted word data in a format: ["invention proposal", "department", "development department, development section", "name", "Taro Yamada", "invention", "personal information extraction system", etc.]. The OCR service 3 also generates word related data indicating a positional or the like relationship among the words in the document. For example, for the document illustrated in FIG. 4, the OCR service 3 generates the word related data in a format: ["department": ["development department, development section"], "name": ["Taro Yamada"], "invention": ["personal information extraction system", etc.]. As such, the text in the document after/adjacent to the document keywords (as set by the user) can be identified as likely personal/sensitive information to be masked/redacted in subsequent processing. The OCR service 3 transmits this OCR data, including the generated extracted word data and the generated word related data, to the document processing device 1.

As the OCR service 3. an existing web service using AI for OCR-type processing can be used.

In ACT4 in FIG. 3, the processor 11 checks whether a keyword is present among the words included in the extracted word data. For example, the processor 11 finds, from the user database DBA, the record REA correlated with the user specified in the authentication processing in ACT1. The processor 11 checks whether a word coinciding with a keyword set in the field FAD is included in extracted word data. The processor 11 determines YES if the relevant keyword is present and proceeds to ACT5

In ACT5, the processor 11 extracts, as a keyword-related word, a word that is indicated as correlated with keyword in the word related data. For example, if "department" is set as a keyword, the processor 11 extracts "development department, development section" as the keyword-related word(s). If a plurality of words coinciding with a keyword are present, the processor 11 extracts a plurality of keyword-related words respectively relating to each of the keywords.

In ACT6, the processor 11 adds the keyword-related word(s) to the custom word(s) set in the field FAC of the record REA found in ACT4 to provide a list/set of words to be masked in subsequent processing. The processor 11 executes the information processing based on the processing program PRA, whereby the processor 11 functions as an addition unit to add the keyword-related word(s) to the user's custom word masking list/set. Thereafter, the processor 11 proceeds to ACT7. If there is no word in the extracted word data coinciding with a keyword, the processor 11 determines NO in ACT4, skips ACT5 and ACT6, and proceeds to ACT7.

In ACT7, the processor 11 acquires a so-called personal information word. That is, the processor 11 acquires all of the extracted words from the document data and checks to see if the extracted words correspond to, or are deemed likely to, match, or substantially so, personal information. The extracted words that correspond to (or are deemed likely to) be personal information are hereinafter referred to as personal information words. In this example, the processor 11 requests the extraction service 4 to identify/extract the personal information words from the acquired document data. The processor 11 saves, in the sub-storage unit 13, the identified personal information word(s) transmitted from the extraction service 4. The processor 11 executes information processing based on the processing program PRA, whereby the processor 11 functions as an acquisition unit in this context.

In this example, the extraction service 4 independently extracts the personal information word(s) from the document data then transmits the extracted personal information word(s) to the document processing device 1. For example, for the document illustrated in FIG. 4, the extraction service 4 extracts "Taro Yamada" as a personal information word.

As the extraction service 4, an existing web service using AI to identify likely personal/sensitive information can be used. Accordingly, in this example, the particular words extracted as a personal information word depends on the settings/specifications of the service being used.

In ACT8, the processor 11 selects one of the OCR extracted (identified) words provided by the OCR data acquired in ACT3. In this context, each extracted word selected by the processor 11 in ACT8 is referred to as a selected word.

In ACT9, the processor 11 checks whether the selected word coincides with any personal information word acquired in ACT7. If the selected word coincides with a personal information word, the processor 11 determines YES and proceeds to ACT10. As an example, if the selected word is "Taro Yamada", since "Taro Yamada" coincides with a personal information word (e.g., a word identified as likely personal/sensitive information in ACT7), the processor 11 proceeds to ACT10.

In ACT10, the processor 11 determines the selected word is first-type personal information. That is, a word determined as the first-type personal information is a word generally determined as personal information regardless of the user or the user's choice of custom words. In the present example, the name "Taro Yamada" is determined as the first-type personal information. The processor 11 executes the information processing based on the processing program PRA, whereby the processor 11 functions as a determination unit in this context.

If the selected word does not coincide with a personal information word acquired in ACT7, the processor 11 determines NO in ACT9 and proceeds to ACT11. Accordingly, the processor 11 determines the extracted word is different from a general personal information word and thus narrows down the type of word to which the extracted word corresponds. That is, the processor 11 executes the information processing based on the processing program PRA, whereby the processor 11 functions as a narrowing-down unit in this context.

In ACT11, the processor 11 checks whether the selected word is equivalent to a custom word (a word on the user's custom word list). That is, for example, the processor 11 checks a similarity degree between the selected word and each of the custom words of the user. In this context, the custom words may include the keyword-related words that may have been added via ACT4 to ACT6 processing. If the similarity degree between the selected word and one of the custom words is equal to or higher than some predetermined threshold, the processor 11 determines that the selected word is equivalent to a custom word, determines YES, and proceeds to ACT12. As an example, the similarity threshold may be assumed to be set to 90%. The threshold may be set as appropriate by, for example, a person who determines specifications of the document processing device 1.

As explained above, if the selected word matches a custom word or is similar to a custom word above the set threshold, the processor 11 proceeds to ACT12. In this way, the processor 11 selects a word deemed similar to a custom word as personal information (information to be protected). The processor 11 executes the information processing based on the processing program PRA, whereby the processor 11 functions as a selection unit.

Alternatively, the similarity threshold may be individually set by each user and/or on a per word basis and thus may be set as a value in a field provided in the user database DBA accordingly. As an example, if "personal information extraction system" is registered as a custom word beforehand (e.g., was set in field FAC), the processor 11 proceeds to ACT12 when the selected word is "personal information extraction system". As an example, if the selected word is "development department, development section", since the relevant word was added as a custom word in ACT6 (on the basis of its relationship to a keyword), the processor 11 proceeds to ACT12.

In some examples, the processor 11 may cause an existing web service using AI to calculate the similarity degree or determine whether the similarity degree is equal to or higher than the threshold when such is required.

In ACT12, the processor 11 determines the selected word is second-type personal information. The second-type personal information is determined to be personal information set specially by the user. That is, the second-type personal information is identified based on the user's custom word settings and identifications of keywords. In this example, "personal information extraction system" and "development department, development section" are determined as the second-type personal information. The processor 11 executes the information processing based on the processing program PRA, whereby processor 11 functions as a determination unit.

If there is no custom word that matches (or substantially so) the selected word, the processor 11 determines NO in ACT11 and proceeds to ACT13. As an example, if the selected word is any one of "invention proposal", "department", "name", and "invention", since the selected word does not coincide with a personal information word or a custom word (inclusive of the identified keyword-related words), the processor 11 proceeds to ACT13.

In ACT13, the processor 11 determines the selected word to be non-personal information. in this example, "invention proposal", "department", "name", and "invention" are determined to be the non-personal information.

Upon finishing ACT10, ACT12, or ACT13, the processor 11 proceeds to ACT14.

In ACT14, the processor 11 checks whether all of the OCR extracted words have been selected as a selected word. If the selection of all the OCR extracted words is not yet completed, the processor 11 determines NO, returns to ACT8, and repeats ACT8 and subsequent acts in the same manner as explained above for the next OCR extracted word. That is, the processor 11 eventually executes the processing in ACT9 to ACT13 for each of the OCR extracted words from the OCR data acquired in ACT3.

If all of the OCR extracted words have already been selected (processed), the processor 11 determines YES in ACT14 and proceeds to ACT15.

In ACT15, the processor 11 generates final result data for the current document being processed.

As an example, the result data may be data representing a list of extracted words indicating first-type personal information, second-type personal information, or non-personal information. In the present example, the processor 11 generates result data: {["invention proposal", "non-personal information"],["department", "non-personal information"], ["development department, development section", "second personal information"], ["name", "non-personal information"], ["Taro Yamada", "first personal information"], ["invention", "non-personal information"], ["personal information extraction system", "second personal information"], ...}.

The labels "first-type personal information", "second-type personal information", and "non-personal information" used above are merely for explanation and may be replaced by any other labels capable of distinguishing these kinds of information in relevant manner. For example, "first-type personal information", "second-type personal information", and "non-personal information" may be respectively labeled as "personal information", "personal information (custom)", and "Normal".

The result data can be document data edited to black out (redact or obscure) the words determined as either first-type personal information or second-type personal information in the document data acquired in ACT2.

The result data may be or include any other data that may be generated in or by electronic document processing. As such, the specific types of data the processor 11 generates may be decided as appropriate by, for example, the person who determines the specifications of the document processing device 1. The processor 11 may generate different kinds of result data in ACT15. Alternatively, the processor 11 may generate a specific format, type, or kind of result data as designated (selected) by the user from among a plurality of formats, types, and/or kinds of result data options or the like.

After ACT15, the processor 11 generally transmits the result data to the user terminal 2. Alternatively, the processor 11 may save the result data in the sub-storage unit 13 and transmits the result data to the user terminal 2 only in response to a separate request from the user terminal 2. Alternatively, the processor 11 may transmit the result data to an information processing device other than the user terminal 2 that may have been set in advance for each user.

Upon finishing ACT15, the processor 11 ends the current document processing.

As explained above, the document processing device 1 identifies words or phrases as personal information by comparing extracted words to user custom words as well as by use of a general-purpose extraction service 4. In this manner, it is possible to identify personal or sensitive information in a document in a customizable manner while still utilizing the extraction service 4 for much of the processing.

The document processing device 1 need check only whether an extracted word not already identified as personal information by the extraction service 4 matches (or is substantially similar to) a user custom word. In this manner, it is possible to reduce the number of extracted words to be checked against the user's custom word list and thus reduce the load on the processor 11 for handling user custom words.

The document processing device 1 also adds, as a custom word to be checked, a word included in the document in a manner deemed associated with (related to) a keyword previously designated by the user. Accordingly, if the user designates "department name" as a keyword, even if the user does not individually register every possible specific department name as custom words, the user can still extract such department names as words equivalent to personal information based upon the positional relationship of such words to the keyword. That is, when the document has, for example, a standard format with information labels (e.g., "NAME:"), the particular information adjacent to such a label can be added to the custom words to be redacted or the like from the end-result, processed document.

Various modified implementations of the embodiment are also possible. For example, ACT4 to ACT6 in FIG. 3 can be omitted in some examples.

In some examples, in ACT11, the processor 11 may determine YES only if the selected word matches completely to the custom word rather than relying on a similarity or equivalence determination.

An embodiment may be implemented as a document processing system that performs the document processing explained above in a distributed manner with a plurality of information processing devices utilized.

Some or all of the functions implemented by the processor 11 as software-based information processing can also be implemented by dedicated hardware that executes information processing not based on a software program, such as a logic circuit. Each of the functions explained above can also be implemented by combining software control with the hardware such as the logic circuit.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the scope of the disclosure. The accompanying claims are intended to cover such forms or modifications as would fall within the scope of the disclosure.

## Claims

1. A document processing device (1), comprising:
a storage unit (13) for a user database in which user identifications are associated with custom words and keywords to be used in a sensitive information redaction processing on electronic documents;
a communication unit connectable (14) to a communication network; and
a processor (11) configured to:
acquire a user identification;
acquire an electronic document;
cause a text recognition processing to be performed on the electronic document;
acquire text recognition data from the text recognition processing performed on the electronic document;
identify a keyword associated with the user identification in the text recognition data;
identify a keyword-related word in the text recognition data, the keyword-related word being in a predefined positional relationship with the keyword, and add the identified keyword-related word to a custom word list associated with the user identification;
acquire a list of personal information words identified in the electronic document;
compare each OCR identified word in the text recognition data to the list of personal information words, and set any OCR identified word matching a listed personal information word for masking in a processed electronic document; and
determine whether any OCR identified word not matching the list of personal information words is equivalent to a custom word on the custom word list, and set any OCR identified word determined to be equivalent to a listed custom word for masking in the processed electronic document.

2. The document processing device according to claim 1, the processor further configured to:
generate the processed electronic document with those OCR identified words that match listed personal information words or determined to be equivalent to listed custom words being masked.

3. The document processing device of claim 1 or 2, wherein the custom word list comprises a custom word registered beforehand.

4. The document processing device of any one of claims 1 to 3, wherein the predefined positional relationship corresponds to the keyword-related word being after or adjacent to the keyword.

5. The document processing device of any one of claims 1 to 4, wherein the processor is configured to determine any OCR identified word not matching the list of personal information words is equivalent to a custom word when a similarity degree between the OCR identified word and the custom words is equal to or higher than a predetermined threshold.

6. The document processing device of any one of claims 1 to 5, wherein the processor is configured to determine any OCR identified word not matching the list of personal information words is equivalent to a custom word when the OCR identified word matches completely to the custom word.

7. The document processing device of any one of claims 1 to 6, wherein the processor is further configured to, for the processed electronic document, generate data representing the OCR identified word matching a listed personal information word, the OCR identified word determined to be equivalent to a listed custom word, and/or any OCR identified word not matching the list of personal information words and not determined to be equivalent to a listed custom word, each indicated with a predetermined label.

8. The document processing device of any one of claims 1 to 7, wherein the processor is configured to check if all of the OCR identified words in the text recognition data are compared to the list of personal information words or determined whether or not the OCR identified words not matching the list of personal information words are equivalent to a custom word on the custom word list.

9. A document processing system, comprising:
a user terminal;
an optical character recognition service;
a personal information extraction service; and
a document processing device of any one of claims 1 to 8, the document processing device being connected to the user terminal, the optical character recognition service, and the personal information extraction service via a communication network and wherein:
the communication unit is connected to the communication network; and
the processor configured to:
acquire a user identification of a user of the user terminal;
acquire an electronic document designated by the user of the user terminal;
cause a text recognition processing to be performed on the electronic document by providing the electronic document to the optical character recognition service;
acquire text recognition data from the text recognition processing performed on the electronic document by the optical character recognition service;
identify a keyword associated with the user identification in the text recognition data;
identify a keyword-related word in the text recognition data, the keyword-related word being in a predefined positional relationship with the keyword, and add the identified keyword-related word to a custom word list associated with the user identification;
acquire a list of personal information words identified in the electronic document by the personal information extract service;
compare each OCR identified word in the text recognition data to the list of personal information words, and set any OCR identified word matching a listed personal information word for masking in a processed electronic document; and
determine whether any OCR identified word not matching the list of personal information words is equivalent to a custom word on the custom word list, and set any OCR identified word determined to be equivalent to a listed custom word for masking in the processed electronic document.

10. A document processing method for a document processing system including a user terminal, an optical character recognition service, a personal information extraction service, and a document processing device connected to a communication network, the method comprising:
acquiring a user identification of a user of the user terminal;
acquiring an electronic document designated by the user of the user terminal;
causing a text recognition processing to be performed on the electronic document by providing the electronic document to the optical character recognition service;
acquiring text recognition data from the text recognition processing performed on the electronic document by the optical character recognition service;
identifying a keyword associated with the user identification in the text recognition data;
identifying a keyword-related word in the text recognition data, the keyword-related word being in a predefined positional relationship with the keyword, and adding the identified keyword-related word to a custom word list associated with the user identification;
acquiring a list of personal information words identified in the electronic document by the personal information extract service;
comparing each OCR identified word in the text recognition data to the list of personal information words, and setting any OCR identified word matching a listed personal information word for masking in a processed electronic document; and
determining whether any OCR identified word not matching the list of personal information words is equivalent to a custom word on the custom word list, and setting any OCR identified word determined to be equivalent to a listed custom word for masking in the processed electronic document.

11. The document processing method according to claim 10, further comprising:
generating the processed electronic document with those OCR identified words that match listed personal information words or determined to be equivalent to listed custom words being masked.

12. The document processing method of claim 10 or 11, wherein the custom word list comprises a custom word registered beforehand.

13. The document processing method of any one of claims 10 to 12, wherein the predefined positional relationship corresponds to the keyword-related word being after or adjacent to the keyword.

14. The document processing method of any one of claims 10 to 13, comprising determining any OCR identified word not matching the list of personal information words is equivalent to a custom word when a similarity degree between the OCR identified word and the custom words is equal to or higher than a predetermined threshold.

15. The document processing method of any one of claims 10 to 14, comprising, for the processed electronic document, generating data representing the OCR identified word matching a listed personal information word, the OCR identified word determined to be equivalent to a listed custom word, and/or any OCR identified word not matching the list of personal information words and not determined to be equivalent to a listed custom word, each indicated with a predetermined label.
